# EUROPEAN PATENT APPLICATION

(11) **EP 1 156 318 A1**
(43) Date of publication of application: **21.11.2001**
(21) Application number: 00830358.8
(22) Date of filing: 17.05.2000
(51) Int. Cl.: G01N 11/06

(54) **A viscosimeter for liquids**

(71) Applicant: Euromeccanica S.r.l., 41053 Maranello (MO) (IT)
(72) Inventor: Cestari, Mauro, 41026 Pavullo Nel Frignano (IT)
(74) Representative: Gotra, Stefano

(57) **Abstract**

The continuous viscosimeter for liquids comprises a chamber (2) having an inlet (3) for the liquid and a plurality of outlets (4) through which the liquid exits in drops. The chamber (2) is relatively large at the top thereof, where the liquid enters, and progressively narrows, terminating on a narrow bottom of the chamber (2). A blade wheel (51) is located beneath the outlets (4) and is set in rotation by the drops of liquid falling from the chamber (2). An encoder provides the rotation rate of the blade wheel (51). The rate is representative of the viscosity of the liquid. The invention is particularly useful for measuring the viscosity of a suspension of fine solid particles in a liquid medium, such as, for example, a silk-screening glaze of a type used in the ceramics industry.

## Description

Specifically, though not exclusively, the invention is useful for measuring the viscosity of a fine solid particle suspension in a liquid, such as for example a glaze for silk-screens of the type used in the ceramic industry.

The main aim of the present invention is to provide a viscosimeter which is constructionally simple and economical, and which is suitable for use in the experimental determination of a viscosity coefficient in a continuous flow of liquid.

An advantage of the invention is that it makes available a viscosimeter able to give a real-time reading of a change in viscosity in a continuously-flowing liquid.

The viscosimeter of the invention can give a real-time signal of the viscosity coefficient in a continuous flow of liquid, which signal can be advantageously used by a control and regulation system which regulates the viscosity of the liquid flow rate.

A further advantage is that the viscosimeter precisely measures the viscosity of a fine solid particle suspension in a liquid medium. Thanks to the invention, the distribution of the solid particles in the suspension can be maintained uniform, and in particular the invention reduces the risk of a localized deposit of solid particles, a phenomenon which might falsify the reading of the measure of viscosity in a suspension.

A further advantage is that the influence exerted by the specific weight of the liquid on the measurement of the viscosity is kept to an absolute minimum. This is true even where the liquid being measured in the form of a continuous flow and is constituted by a suspension.

These aims and advantages and others besides are all attained by the invention as it is characterised in the appended claims.

Further characteristics and advantages of the present invention will better emerge from the detailed description that follows of a preferred but non-exclusive embodiment of the invention, illustrated purely by way of non-limiting examples in the accompanying figures of the drawings, in which:

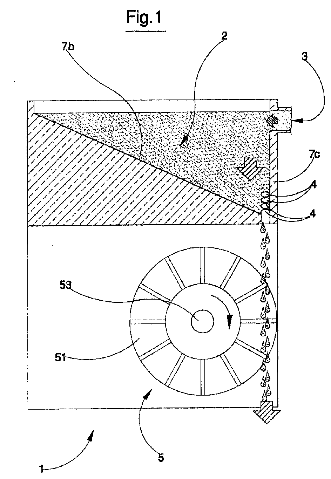

figure 1 shows a vertical elevation diagram of the viscosimeter of the invention;
figure 2 is a plan view from above of a viscosimeter made according to the invention;
figure 3 is a partial section made according to line III-III of figure 2;
figure 4 is a section made according to line IV-IV of figure 3.

With reference to the figures of the drawings, 1 denotes in its entirety a viscosimeter for liquids, advantageously usable for experimentally determining a coefficient of viscosity of a suspension, in particular of a silk-screen glaze for decorating ceramic tiles.

The viscosimeter 1 comprises a chamber 2 superiorly provided with an inlet 3 for a liquid the viscosity of which is to be measured, and inferiorly provided with an outlet for the liquid constituted by a plurality of outlet mouths 4 of predetermined diameter.

The viscosimeter 1 further comprises a device 5 for supplying an indication in relation to the quantity of liquid exiting from the chamber 2 per determined time unit, as will be more fully described herein below. The quantity of liquid is used for evaluating the viscosity of the liquid itself.

The liquid enters the chamber 2 through the upper inlet 3 in a horizontal direction and exits the chamber 2 through a multiple outlet in a substantially vertical direction. There are preferably more than two of the outlet mouths 4.

In the illustrated embodiment they are four in number, but more than four could be provided, allowing for a greater liquid delivery.

The outlet mouths 4 are aligned and close to each other on an inclined surface which inferiorly delimits the chamber 2. The outlet mouths 4 are at slightly different heights, the lowest being at the lowest point of the chamber. Each mouth 4 is located at an inlet end of a respective nozzle 6 and has a vertical axis through which the liquid passing through the chamber 2 passes. In the described embodiment the nozzles 6 are of differing lengths. The nozzles 6 have lower outlet ends which are more or less at a same height. Preferably the section of the nozzles 6 is narrowed down so that the liquid exits in drop form.

The chamber 2 is superiorly provided with an overflow outlet so that the level of liquid inside it is kept constant, preferably at a slightly higher level than the liquid inlet level. The upper surface of the liquid introduced into the chamber is in communication with the atmosphere.

The chamber 2 is relatively wide at the top, at the liquid inlet 3, and gradually narrows down to a bottom where there is at least one outlet mouth 4.

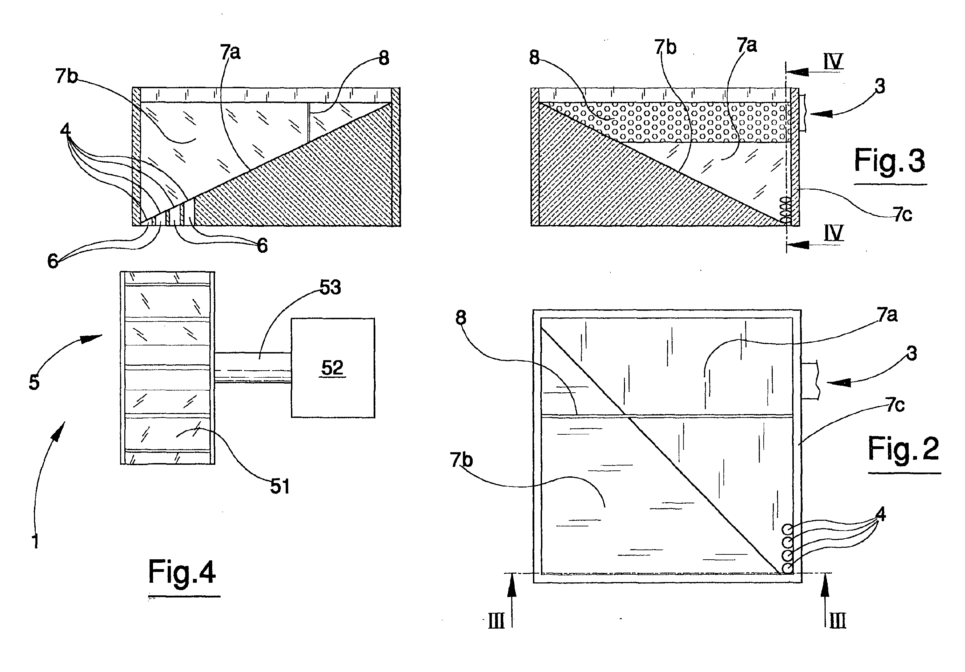

The shape of the chamber 2 progressively converges downwards so as to reduce the risk of formation of deposits of solid particles. Preferably this convergence is directed towards a peripheral zone (with reference to a plan view from above, as in figure 2) of the chamber 2. The vertical passing through the centre of the bottom of the chamber 2 is displaced in relation both to the liquid inlet 3 and to the vertical passing through the centre of the upper part of the chamber, especially in the upper part located at the inlet 3 height.

In the illustrated embodiment, the chamber 2 is delimited by two adjacent inclined walls 7a and 7b having an edge in common. A first inclined wall 7b is at least partially in front of the liquid inlet 3 (in order to calm the motion of the liquid at inlet), while a second inclined wall 7a is located by the side of the inlet 3. Overall the two inclined walls 7b and 7a form a sort of slide running downwards and terminating in the lowest area of the chamber 2.

The inlet 3 of the chamber 2 is situated on a vertical wall 7c which delimits the chamber 2 itself and which is adjacent to one of the two inclined walls 7a. The outlet mouths 4 are located adjacent to the vertical wall 7c which affords the inlet 3.

Internally of the chamber 2 there is a perforated wall 8 which divides the chamber 2 into two half-chambers which intercommunicate through the perforations. The perforated wall 8 is arranged vertically and is parallel to the inlet motion direction of the liquid. The perforated wall 8 separates the inlet 3 from the outlet mouths 4, so that the liquid enters in the upper part of a first half-chamber, then passes into a second half-chamber through the perforated wall 8 and exits from the bottom of the second half-chamber.

In the illustrated embodiment the liquid flow rate exiting from the chamber 2 is measured indirectly through a measurement of the rotation rate of a turbine driven by the liquid itself. The device 5 for measuring the liquid flow rate comprises a blade wheel 51, located beneath the outlet mouths 4 and driven by the free-falling liquid coming from the mouths 4; the device 5 also comprises means for detecting the rotation rate of the blade wheel 51. The means for detecting can comprise, for example, an encoder 52 applied to a rotating shaft 53 on which the blade wheel 51 is mounted. The rotation rate of the shaft 53 is used as a representative measurement of the liquid viscosity. The liquid outlet mouths 4 are reciprocally aligned in a parallel direction to the rotation axis of the blade wheel 51. The blade wheel 51 has blades which are sufficiently long to be struck by the drops falling from all of the outlet nozzles 6.

The device for measuring 5 indicates the liquid flow rate as it exits from the chamber 2, and is extremely simple, economical and reliable, although other devices could be used for the same function. Alternative devices could be, for example, a device able to count the number of drops falling from the outlet nozzles 6 (for example an optical counter).

During operation, the liquid enters the chamber 2, from which is exits by dripping through the lower nozzles 6. The drops fall onto the blade wheel 51 which is thus set in rotation. The rotation rate is an indicator of the coefficient of the liquid viscosity; the greater the rotation rate, the lower the liquid viscosity.

The above-described viscosimeter can be used in a retroactive control and regulation system to regulate in real time the viscosity of a suspension of fine solid particles in a liquid solution (for example a silk-screening glaze). If the viscosity does not correspond to the predetermined measurement, the control and regulation system appropriately modifies the ratio between the solid and liquid parts of the suspension (for example through a controlled addition of solid particles or liquid volume in the suspension) until the predetermined viscosity is achieved.

It has been seen that by causing the liquid to exit through multiple outlets, i.e. outlets made up of distinct mouths, the influence of the specific weight of the liquid on the exiting flow rate is considerably reduced, while the influence of the viscosity is considerably increased. Thus, thanks to the predisposition of a multiple outlet, the liquid flow rate exiting from the chamber 2 represents the true viscosity of the liquid more efficiently and faithfully.

It has also been seen that the liquid flow rate exiting from the chamber more precisely indicates the liquid viscosity when the liquid exits in the form of droplets passing through relatively narrow-section nozzles 6.

The system for measuring the liquid flow-rate exiting from the chamber by reading the rotation speed of a turbine rotated by the liquid free-falling (preferably in drop-form) from the outlet mouths 4 of the chamber 2 is particularly practical, reliable and precise.

The viscosimeter of the invention, when used for measuring the viscosity of a suspension of fine solid particles dispersed in a liquid medium, prevents sedimentation of the suspension thanks to the special shape of the chamber, especially thanks to the fact that the chamber progressively narrows in a downwards direction, preferably continuously, and terminates at the bottom in a narrowed area containing at least one outlet mouth.

The perforated wall dividing the chamber into two half-chambers has the function of obstructing the liquid as it forcefully enters the chamber; thus the liquid in the first half-chamber loses the greater part of its inlet motion and the liquid in the second half-chamber (which contains the outlet mouths) is characterised by low turbulence.

Thanks to the above the liquid flow rate as it drips from the chamber depends considerably less on the specific weight of the liquid, and considerably more on the viscosity thereof, and is therefore an excellent indicator of viscosity.

## Claims

1. A viscosimeter for liquids, **characterised in that** it comprises:
at least one chamber (2) having at least one inlet (3) for a liquid a viscosity of which is to be measured, and having a plurality of individual outlets (4) for the liquid, each of the outlets (4) having a passage section which is small and each of the outlets being arranged at a bottom of the at least one chamber (2);
at least one device (5) for measuring a quantity of liquid exiting from the plurality of outlets (4) per unit of time, the quantity being correlated to a viscosity of the liquid.

2. The viscosimeter of claim 1, **characterised in that** the liquid exits from each of the plurality of outlets (4) in drips.

3. The viscosimeter of claim 1 or 2, **characterised in that** at least an upper surface of the liquid introduced into the at least one chamber (2) is in communication with an external environment.

4. The viscosimeter of any one of the preceding claims, **characterised in that** the chamber (2) is large at a top thereof, at a part corresponding to the at least one inlet (3) of the liquid; the chamber (2) becoming progressively narrower and terminating at a bottom thereof where one of the plurality of outlets (4) is situated.

5. The viscosimeter of any one of the preceding claims, **characterised in that** a perforated wall (8) is located inside the chamber (2), which perforated wall (8) divides the chamber (2) into two half-chambers which intercommunicate at least through perforations in the perforated wall (8); a first half-chamber receiving the entering liquid and a second half-chamber affording the plurality of outlets (4).

6. The viscosimeter of any one of the preceding claims, **characterised in that** the chamber (2) exhibits at least one overflow outlet which keeps a level of the liquid in the chamber (2) at a predetermined level and preferably at a level which is higher than a liquid inlet level.

7. The viscosimeter of any one of the preceding claims, **characterised in that** it comprises at least three outlets (4) arranged one by a side of a next thereof.

8. The viscosimeter of any one of the preceding claims, **characterised in that** each outlet (4) comprises a vertical-axis nozzle (6) having an upper end which is in communication with the chamber (2).

9. The viscosimeter of any one of the preceding claims, **characterised in that** the device (5) for measuring a quantity of liquid exiting from the plurality of outlets (4) per unit of time comprises:
a blade wheel (51) arranged below the plurality of outlets (4) which is set in rotation by the liquid as it free-falls on exit from the chamber (2);
means (52) for detecting a rotation rate of the blade wheel (51), which rotation rate can be used as a measurement representative of a viscosity of the liquid.

10. The viscosimeter of claim 9, **characterised in that** the plurality of outlets (4) for the liquid are at least three in number and are arranged aligned in a parallel direction to a rotation axis of the blade wheel (51).

11. Use of a viscosimeter as in any one of the preceding claims for continuously measuring a viscosity of a silk-screen glaze for decorating ceramic products.

12. Use of a viscosimeter as in any one of the preceding claims in a field of retroactive control and regulation systems, for regulating in real time a viscosity of a suspension of fine solid particles in a liquid medium, by addition of solid particles or liquid medium, up until a predetermined viscosity is reached.
